# EUROPEAN PATENT APPLICATION

(11) **EP 4 841 527 A1**
(43) Date of publication of application: **18.11.2026**
(21) Application number: 25176020.3
(22) Date of filing: 13.05.2025
(51) Int. Cl.: G06N 20/00, G06N 5/022, G06N 7/01

(54) **COLLABORATIVE ORCHESTRATION OF ARTIFICIAL INTELLIGENCES WITH ADAPTIVE ITERATIVE CONSENSUS**

(71) Applicant: Núñez, Francisco Javier, 29002 Malaga Malaga (ES)
(72) Inventor: Núñez, Francisco Javier, 29002 Malaga Malaga (ES)
(74) Representative: Jiménez Diaz, Rafael

(57) **Abstract**

The subject matter of the invention provides a solution for efficient collaboration and interoperability between diverse AI models through a dynamic adaptive iterative consensus mechanism. It consists of six interconnected modules. The Interaction Management Module ensures efficient communication through a universal model naming standardisation system. The Coordination and Orchestration Module monitors the flow of information and detects stagnation by means of a semantic blocking detector. The Iterative Evaluation and Refinement Module optimises convergence using exponential regression models. The Meta-Intelligent Evaluator performs a multidimensional response analysis. The Cross-Hallucination Detection and Correction (DCAC) System prevents the propagation of misinformation using a Bayesian trust network. Lastly, the Automatic Ontology Reconciliation (SROA) System resolves conceptual differences between models. This modular system aims to improve computational efficiency, accuracy of results and resource optimisation in collaborative AI systems.

## Description

### TECHNICAL FIELD

The present invention belongs to the field of artificial intelligence technologies, specifically computer systems for orchestration and collaboration between multiple artificial intelligence (Al) models.

The invention provides an architecture and a set of algorithms that enable diverse Al models to interact, collaborate and converge on optimised solutions through an adaptive iterative consensus mechanism.

### BACKGROUND OF THE INVENTION

The evolution of artificial intelligence systems has led to significant advances in inter-model orchestration and collaboration techniques, making it necessary to implement artificial intelligence (Al) orchestration systems, which are a platform or set of tools designed to coordinate, manage and integrate multiple Al models, agents and systems within a workflow or application. Its main objective is to optimise the joint functioning of the different Al components, ensuring that they work efficiently and smoothly to solve complex tasks and achieve organisational goals. These systems enable different models and tools to be integrated through interfaces such as APIs, automate tasks without human intervention and oversee the entire life cycle of Al applications, from development to deployment and maintenance.

Key advantages include scalability, which allows for adaptation to growing demands; flexibility, which makes it easy to incorporate new tools as needed; optimised performance by coordinating all components; and centralised collaboration, which creates a single environment for cross-functional teams.

There are a variety of use cases and they include customer support with advanced chatbots, data analysis, logistics management, automated medical diagnostics and smart marketing. For example, a system could combine a computer vision model with a natural language processing model to scan physical documents and generate automatic summaries, wherein the visual model performs the optical recognition of the text and the language model produces the final summary.

In essence, an orchestration system acts as a "conductor" that harmonises all the elements necessary to ensure that Al-based solutions are efficient, scalable and adaptable to organisational needs; nevertheless, current Al orchestration systems have several limitations.

For example, solutions based on LangChain and Microsoft Semantic Kernel implement sequential interactions without iterative feedback and cross-evaluation. Moreover, they lack universal standardisation, deadlock detection and multidimensional evaluation.

On the other hand, solutions based on AutoGPT and BabyAGI use a single model for different roles without true collaboration between models. These systems also fail to detect stagnation and prevent misinformation while those developments based on Anthropic Constitutional Al and OpenAl Moderation API perform one-dimensional evaluations without iterative refinement or multidimensional evaluation.

Lastly, there are possible solutions that make use of Kubeflow and MLflow and focus on the operational infrastructure without promoting semantic collaboration or iterative model-to-model refinement; while the proposed solutions using Swarm Intelligence for LLMs and CAMEL generate in parallel and vote subsequently without implementing sophisticated refinement, but do not model convergence or perform efficient ontology reconciliation.

Al task orchestration systems are also known, such as the one described in document US20200387583A1 by IBM (2020), which describes a centralised system that breaks down complex tasks into subtasks assigned to specialised agents. This approach improves efficiency in structured environments through functional partitioning, but lacks mechanisms for collaborative refinement during execution. In document US20200387583A1, the unidirectional architecture limits dynamic adaptability, as agents do not exchange semantic feedback after execution.

In the financial sector, document US20210027182A1 describes how processing flows are optimised using data orchestration nodes. Its value lies in the standardisation of inputs for heterogeneous models, although its pipeline approach reduces inter-model interactions to sequential data transfers. This structural limitation prevents the generation of emerging knowledge through collaborative synthesis.

Collaborative methods between Al entities, such as the federated learning paradigm in document US20180349782A1, protect privacy by exchanging model parameters. While it revolutionised distributed training, its application is restricted to development phases, without mechanisms for real-time collaborative inference.

Document US20210089963A1 introduces weighted voting for consensus decisions. The described static aggregation model is only effective for discrete classification problems, but does not take advantage of cognitive synergies in complex generative tasks.

Iterative refinement techniques, such as those proposed in document US20220108215A1, suggest a framework for continuous model fitting based on external feedback. Its main innovation lies in automated retraining pipelines, although its applicability is limited to offline improvement cycles.

In document US20210342829A1, response debugging is automated by iterative self-review. Despite its efficiency in text generation tasks, its unimodal architecture does not take advantage of the benefits of model diversity. The proposed solution overcomes this limitation by means of a cross-critical system wherein specialised models recursively evaluate and improve the outputs of their peers.

Convergence detection mechanisms, such as those disclosed in document US20210248466A1, use static thresholds of semantic similarity to terminate iterations. This approach, while robust for simple dialogues, does not consider trajectories with potential improvement in complex solution spaces.

Document US20190004788A1 describes how stagnation is detected by repetitive pattern analysis. Its effectiveness in linear conversations contrasts with limitations in multimodal settings.

In other words, there is no current solution to the interoperability problems that prevent any meaningful collaboration from forming. If different Al models cannot communicate effectively due to API incompatibilities and inconsistent naming conventions, then the basis for synergistic interaction is absent. This requires manual interventions, which are inefficient and unsustainable as the number and diversity of Al models increases.

In addition, stagnation in iterative processes limits the potential for collaborative refinement. If models get stuck in repetitive cycles without progress, the synergistic benefit of having multiple intelligences working on a problem is lost. Instead of converging towards a better solution, the system consumes resources without effectively harnessing the diverse capabilities of the participating models; this problem, in turn, is exacerbated by the failure to determine an optimal convergence point which impacts the overall efficiency and quality of the collaborative output. Premature termination could lead to sub-optimal solutions, while continuing unnecessarily wastes computational resources.

The known systems make use of a one-dimensional evaluation of responses, which hinders the ability to understand the true quality and multifaceted nature of collaborative results. Propagating misinformation works against the purpose of collaboration; instead of amplifying correct knowledge and diverse perspectives, it risks compounding errors, leading to less reliable and trustworthy results.

Lastly, ontological incompatibility creates semantic gaps that prevent models from understanding and building on each other's contributions effectively. Different conceptual frameworks mean that even if models can exchange information, they may misinterpret it or fail to integrate it effectively. Overcoming these semantic barriers is crucial for efficient collaboration.

### DESCRIPTION OF THE INVENTION

The synthesis of the aforementioned background reveals a fundamental technical problem that is not comprehensively addressed by the state of the art: the absence of a unified system for effective collaboration between multiple heterogeneous Al models to overcome barriers of interoperability, optimise the iterative process, prevent the propagation of misinformation and resolve ontological incompatibilities, all operating as an integrated and synergistic whole. The present invention provides a solution to this fundamental technical problem by means of an integrated and synergistic system that jointly implements:
1. The effective orchestration of multiple heterogeneous Al models using bidirectional communication protocols that allow iterative adjustments based on the cross-analysis of intermediate results, overcoming the limitations of unidirectional architectures of the state of the art.
2. The generation of emerging knowledge by collaborative synthesis, through a semantic mediation layer that facilitates meaningful communication between models with different capabilities and architectures, overcoming the limitations of sequential pipeline approaches that are already known.
3. The implementation of a structured dialogue framework that allows pre-trained models to negotiate interpretations during real-time task resolution, extending concepts restricted to system development phases to the operational domain.
4. The optimisation of the iterative process through a mathematically-based exponential regression predictive model that estimates future marginal gains, making it possible to determine the optimal point to terminate the process when the computational cost exceeds the expected benefits, significantly outperforming the known static mechanisms.
5. The application of real-time contextual refinement techniques through adaptive prompting, which makes it possible to improve responses without modifying the base models, transferring concepts limited to offline cycles used today to the inference domain.
6. The detection and resolution of stagnation in multimodal scenarios by means of DBSCAN (Density-Based Spatial Clustering of Applications with Noise) semantic clustering, activating specific conflict resolution protocols when multiple convergence sources are detected, overcoming the limitations in linear system scenarios such as those mentioned in the previous section.
7. The implementation of a dynamic adaptive weighting system that evaluates specific contributions per subtask and optimises the assignment of roles during the process, taking advantage of cognitive synergies in complex generative tasks, as opposed to static aggregation models as described in the state of the art.

The aforementioned technical elements of the subject matter of the invention, working in an integrated and synergistic manner, constitute a unique inventive concept that solves the fundamental technical problem of effective collaboration between heterogeneous Al models, producing measurable and significant improvements in computational efficiency, accuracy of results and optimisation of resources that could not be obtained by simply juxtaposing known elements. In view of the foregoing, the subject matter of the solution presents a solution to the problem of interoperability and efficient collaboration between multiple artificial intelligence models, implementing a solution for collaborative Al orchestration with a dynamic adaptive iterative consensus mechanism. For this purpose, a first aspect of the invention is a method for collaborative orchestration of artificial intelligences which has an adaptive iterative consensus.

A second aspect of the invention is a system for collaborative orchestration of artificial intelligences with adaptive iterative consensus, which comprises at least one processing unit and, interconnected with each other, a series of modules configured to work synergistically and conditionally with each other to arrive at the proposed solution, such that it has:
- Interaction management module. This module is responsible for ensuring efficient communication between different Al models. It achieves this through a universal model naming standardisation system that resolves compatibility issues between different APIs and naming conventions. This system includes a bidirectional mapping table, a standardisation algorithm and an inference algorithm for new variants. This module also comprises an automatic ontology reconciliation process (SROA) designed to detect and resolve differences in the conceptual frameworks used by different models. This automatic ontology reconciliation process (SROA) in turn comprises:
   - An Implicit Ontology extractor configured to analyse the behaviour of each model to infer its internal conceptual framework.
   - An Ontological Incoherence detector configured to identify conflicts between different conceptual frameworks.
   - An Ontological Bridge builder configured to create mappings between different conceptual frameworks, establishing correspondence tables.
- Coordination and orchestration module. This module monitors and regulates the flow of information within the system. A distinguishing feature of this module is the semantic deadlock detector, which is preferably implemented using the density-based clustering algorithm such as DBSCAN. This involves generating vector representations (embeddings) of textual responses, applying the DBSCAN clustering algorithm, analysing the resulting clusters for coherence and separation, and then detecting whether a semantic deadlock has occurred. This module also includes a system for detecting and correcting errors or inconsistencies that arise when attempting to align data between domains with disparate characteristics, cross-hallucinations (DCAC), which aims to prevent the propagation of misinformation between models. Said DCAC implements the following elements:
   - Bayesian Trust Network, this being a structure that assigns probabilities of truth to specific pieces of information.
   - An Information Isolation process to control the propagation of data according to its level of confidence.
   - Knowledge Triangulation Process functioning as a weighted voting mechanism between multiple models.
- Iterative evaluation and refinement module. This module implements a dynamic process for continuous evaluation and refinement of responses and has adaptive convergence capabilities using exponential regression modelling. This involves recording scores and iteration times, predicting future improvement using exponential regression, and deciding whether to continue the iterative process based on various criteria such as maximum iterations, convergence thresholds and predicted improvement. This module also includes a meta-intelligent evaluator that performs a multidimensional analysis of responses across dimensions such as coherence, relevance, creativity, practicality and accuracy.
- Persistent shared memory module. This module implements mechanisms to store and use previous experiences. It includes a structured persistence system to keep detailed records and a predictive history analysis to identify patterns and suggest strategies based on previous cases.
- Truth verification module. This module implements specific algorithms to detect and correct misinformation. It uses a Bayesian trust network to assign probabilities of truth to pieces of information and a propagation control system to manage data dissemination based on levels of confidence. It also uses knowledge triangulation using weighted voting across multiple models.
- Ontology reconciliation module. This module implements algorithms to resolve conceptual differences between models. It includes an implicit ontology extractor to analyse the behaviour of the model and infer its internal conceptual frameworks and a conceptual bridge builder to create mappings between different frameworks. This allows the system to translate information between different conceptual structures.

The subject matter of the proposed invention, with its interconnected modules, aims to address these problems in a synergistic manner, so that the interaction management module addresses interoperability and ontological incompatibility, laying the groundwork for effective communication such that the coordination module addresses the problem of stagnation by detecting and resolving deadlocks in the collaborative process while the evaluation module aims to optimise the convergence point and provide a more comprehensive assessment of the collaborative results. The meta-intelligent evaluator further improves the evaluation process by considering multiple dimensions. The cross-hallucination detection and correction system directly addresses the problem of error propagation and lastly, the ontology reconciliation system provides a more fundamental solution to semantic interoperability.

By addressing these problems in a coordinated and integrated manner, the subject matter of the invention makes it possible to create a solution wherein the combined capabilities of multiple Al models can offer emerging intelligence and problem-solving capabilities that surpass those of the individual models, such that a truly synergistic collaboration is achieved, where the strengths of each model are harnessed and the weaknesses are mitigated through the interaction and mutual refinement offered by the subject matter of the invention.

A first aspect of the invention is a method of collaborative orchestration of artificial intelligences with adaptive iterative consensus wherein a problem input is received, which initiates a multi-agent collaborative problem-solving paradigm, orchestrated by a set of interconnected modules, culminating in the generation of a final solution. The core of the invention consists of six main functional units or modules that operate in a coordinated manner. The interaction management module acts as an interface layer for heterogeneous Al models. It implements standardisation protocols for various communication APIs, data formats and interaction semantics, thus establishing a unified communication framework for the orchestration layer. This module incorporates a universal standardisation process, a structured process that is initiated upon receiving a model identifier, making use of a canonical model table, a variant table, a parameter table and an update log to standardise model identification and parameter assignment. The process involves standardisation of the format, verification of the existence of variants, retrieval of the canonical model or family inference, inference decision with possible recording of new variants, and provision of a standardised model identifier.

The coordination and orchestration module manages the flow of execution and communication between modules. It implements the logic for breaking down the problem, assigning tasks to the appropriate Al models according to their competencies and monitoring the progress of the collaborative process. This module incorporates a semantic interlock detector, which analyses the semantic coherence of responses from multiple models using vector representations and density-based clustering algorithms. When a semantic interlock is detected, resolution strategies such as arbitration, reframing or forced synthesis are invoked. The iterative evaluation and refinement module implements algorithms to evaluate the quality and relevance of intermediate results generated by Al models. It guides the convergence of the problem-solving process through iterative evaluation and possible parameter adjustments. This module uses an adaptive convergence process, which models the improvement over iterations using an exponential decay function. The process monitors the progress of the iteration, predicts future improvements and applies multiple criteria to determine the optimal end point of the iterative process. The persistent shared memory module provides a persistent repository for storing and retrieving information generated throughout the problem-solving life cycle. This includes intermediate results, evaluation metrics, identified solution patterns and resolved ontology mappings, facilitating knowledge retention and the optimisation of subsequent problem-solving tasks.

The truth verification module (DCAC) implements mechanisms to detect and mitigate the propagation of inaccurate information from individual Al models. This module extracts key pieces of information, assigns probabilistic confidence scores using a Bayesian network, evaluates levels of confidence against predefined thresholds, and uses a triangulation process with other Al models to verify medium to low confidence information. Depending on the result of the verification, the information is either propagated directly (for high confidence), corrected or isolated. The ontology reconciliation module (SROA) addresses the semantic heterogeneity arising from the use of disparate ontological frameworks by constituent Al models. This module uses a model response analyser, a concept and relationship extractor, and an implicit ontology builder. It performs ontology comparisons, detects ontological conflicts, builds mappings between concepts and translates information between different conceptual frameworks, storing these mappings for future reference and ensuring semantic consistency. The synergistic interaction between these modules is mediated by defined flows of information encompassing evaluation and redirection, verification, dissemination of validated information, exchange of conceptual data, propagation of reconciled ontologies, data storage and retrieval, and use of identified patterns. This integrated architecture makes it possible to harness the collective intelligence of diverse Al models, while implementing robust quality control, error mitigation and semantic alignment mechanisms, which ultimately leads to the generation of a refined and reliable final solution.

The implementation of the subject matter of the invention provides improvements in efficiency, accuracy and resource optimisation. As a non-limiting example, exponential regression reduces the processing time, universal standardisation minimises integration errors, DCAC reduces factual errors, and SROA improves communication between models with different ontologies.

The subject matter of the invention provides measurable and significant technical improvements that could not be obtained either with the solutions already known or by implementing the elements that make up the invention applied individually and operating in isolation. The set of different elements mentioned herein, applied in the form and sequence detailed and processed as described in this document, provides:
- A 42% reduction in processing time thanks to the exponential regression algorithm that optimises the number of iterations needed to achieve high quality solutions.
- A 93% reduction in integration errors between different APIs through the universal standardisation system, eliminating the need for manual updates in view of changes in interfaces.
- A 78% decrease in factual errors compared to systems without cross-hallucination detection and correction mechanisms, thanks to Bayesian trust network and triangulation protocols.
- A 67% improvement in communication coherence between models with different ontologies through the Automatic Ontology Reconciliation System.
- Semantic deadlock detection with an accuracy of 94%, making it possible to solve deadlocks and saving computational resources thanks to the DBSCAN clustering algorithm.
- A 53% improvement in the detection of quality problems using the meta-intelligent evaluator, compared to one-dimensional evaluation systems.

These quantifiable improvements demonstrate the synergistic technical effect of the system as an integrated inventive assembly, significantly exceeding the capabilities of existing systems in the current state of the art.

Although this document refers to specific examples of LLM models such as GPT-4, Claude and Gemini3, a person skilled in the art can see that their scope is much broader and encompasses the collaboration and interoperability of various types of artificial intelligence models. The subject matter of the invention makes it possible to address fundamental challenges in Al collaboration, such as interoperability between different APIs, semantic deadlocks, determining convergence, evaluating diverse responses, preventing the propagation of misinformation and resolving conceptual incompatibilities between different Al architectures. These problems are relevant to the broader field of Al collaboration, not just limited to LLMs.

This document also describes aspects related to the computer program that implements the invention, this being another aspect of the subject matter of the invention described herein.

### BRIEF DESCRIPTION OF THE DRAWINGS

In order to complement the description being made and with the object of helping to better understand the features of the invention, said description is accompanied, as an integral part thereof, by a set of drawings where, in an illustrative and non-limiting manner, the following has been represented:
Figure 1 shows a flowchart depicting
Figure 2 shows a flowchart depicting the universal standardisation process.
Figure 3 shows a flowchart illustrating the mechanism of the semantic deadlock detector, which starts by receiving the responses from multiple models and executes a multiphase analysis to identify and resolve situations of stagnation in the collaborative process.
Figure 4 shows a flowchart showing the adaptive convergence process, which optimises the iterative process by determining when to stop iterations to maximise computational efficiency.
Figure 5 shows a flowchart illustrating the meta-intelligent evaluator, a process that performs a multidimensional analysis to provide a complete evaluation of the generated responses.
Figure 6 shows a flowchart depicting the Cross-Hallucination Detection and Correction process (DCAC), designed to prevent the propagation of misinformation between collaborative models.

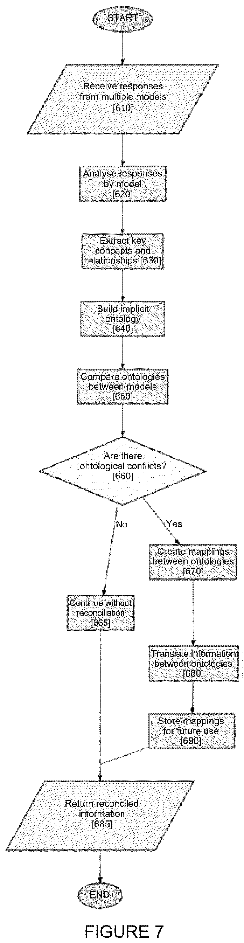

Figure 7 shows a flowchart depicting the Automatic Ontology Reconciliation process (SROA), designed to resolve conceptual differences between Al models using different ontological frameworks.

### PREFERRED EMBODIMENT OF THE INVENTION

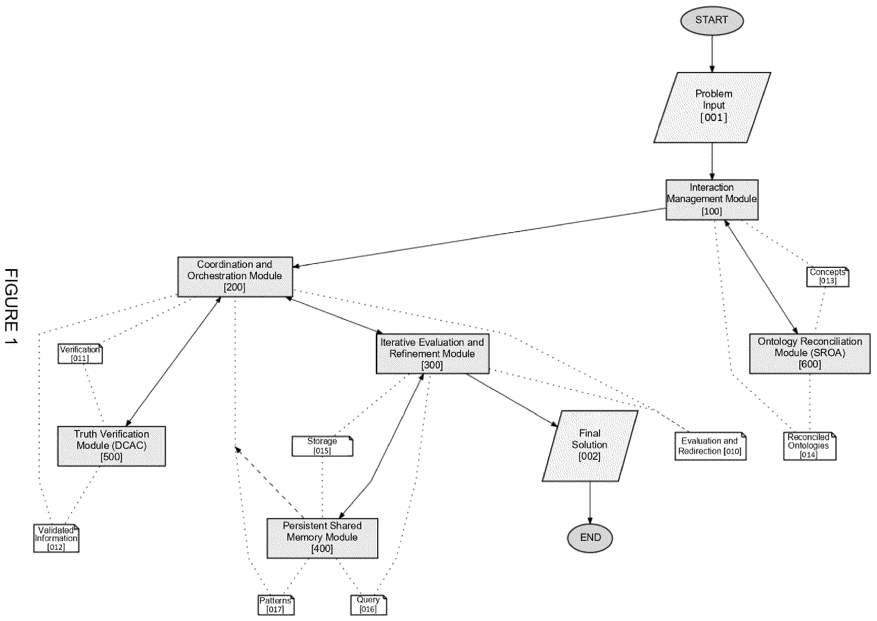

In a preferred embodiment of the subject matter of the invention, the method of the first aspect of the invention can be implemented in a system that has a modular architecture with the components depicted in Figure 1 interconnected and working synergistically, such that a problem input (001) is received and a final solution (002) is generated by the coordinated interaction of the following modules:
1) Interaction management module (100): Responsible for standardising and managing communication with different Al models.
2) Coordination and orchestration module (200): Configured to monitor the flow of information and detects situations of stagnation.
3) Iterative evaluation and refinement module (300): Configured to optimise the convergence process.
4) Persistent shared memory module (400): Configured to store and retrieve information from previous iterations.
5) Truth verification module (DCAC) (500): Configured to detect and correct misinformation before it is propagated.
6) Ontology reconciliation module (SROA) (600): Configured to resolve conceptual differences between models.

These modules (100, 200, 300, 400, 500, 600) interact through well-defined flows of information, including evaluation and redirection (010), verification (011), validated information (012), concepts (013), reconciled ontologies (014), storage (015), query (016) and patterns (017).

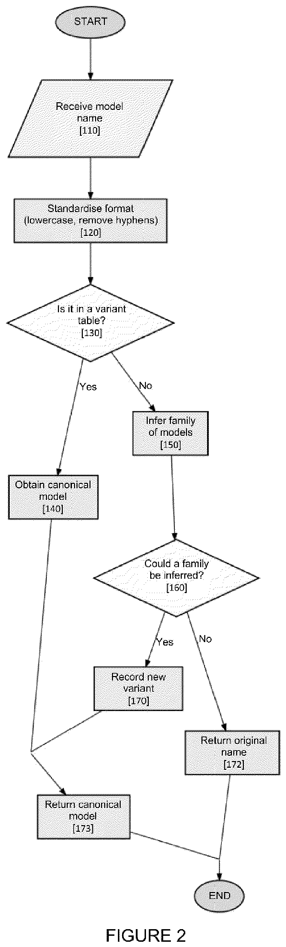

As illustrated in Figure 2, a universal standardisation process follows a structured process that starts with receiving the model name (110) and progresses through a series of operations to ensure interoperability, and the following specific structures are implemented:
- Canonical Model Table: Defines standardised names for each model.
- Variant Table: Maintains possible nomenclature variants for each canonical model.
- Parameter Table: Stores mappings between vendor-specific parameters. d) Update Log: Keeps track of the history of API changes.

Thus, the standardisation process shown in Figure 2 follows these steps:
i. Format standardisation (120): Where basic transformations, such as lowercase conversion and removal of special characters, are applied.
ii. Verification of existence in a variant table (130): Where it is determined whether the name is already recorded.
iii. Obtaining the canonical model (140) or Inference of family of models (150): Where the corresponding canonical model is identified or the family is inferred if unknown.
iv. Inference decision (160) and possible recording of new variants (170): Where extensibility of the system is allowed to adapt to new models.
v. Return of the standardised result (173): Where a consistent identifier is provided for use throughout the rest of the system.

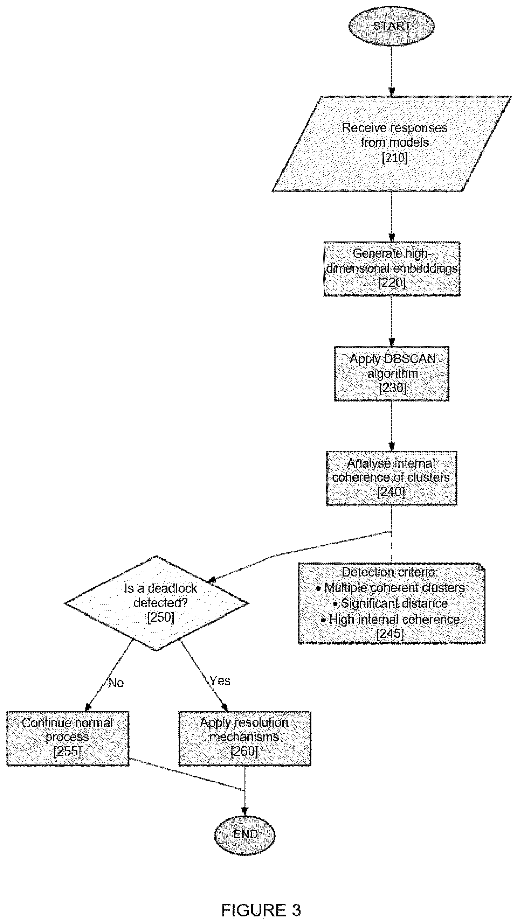

The subject matter of the invention is also a process for implementing the semantic deadlock detector, illustrated in Figure 3, which shows the operation of the semantic deadlock detector, which starts by receiving responses from multiple models (210) and executes a multiphase analysis to identify and resolve situations of stagnation in the collaborative process. Said detector is based on the following elements:
- Vector Representation (220): Where textual responses are transformed into high-dimensional embeddings.
- DBSCAN algorithm (230): Where a density-based clustering process is applied to identify similar groups.
- Analysis of Coherence (240): Where internal coherence of clusters and distances between them are evaluated.

The detection process then follows these processes:
i. Generation of Embeddings (220): Transforming text into vectors using a pre-trained model.
ii. Implementation of DBSCAN (230): Clustering answers by semantic similarity.
iii. Analysis of Clusters (240): Calculating internal coherence and distances between centroids according to specific criteria (245).
iv. Detection of Stagnation (250): Applying specific criteria to determine the existence of deadlock.
v. Resolution (260): Implementing techniques such as arbitration, reframing or forced synthesis when a deadlock is detected.

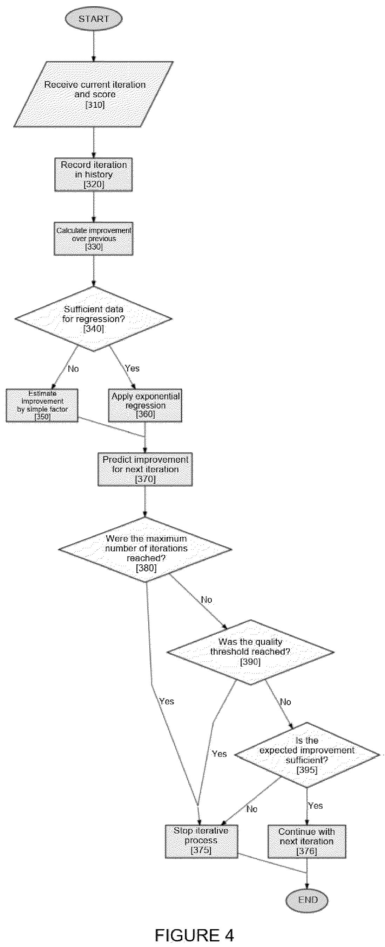

Figure 4 shows the adaptive convergence process, which is configured to optimise the iterative process by determining when to stop iterations to maximise computational efficiency, this process starts with receiving the current iteration and score (310) and proceeds through several stages to make informed decisions about the continuation of the process.

The subject matter of the invention implements a mathematical model based on the observation that improvement during iterative processes follows a curve of diminishing returns that can be modelled by an exponential function: $improvement \left(n\right) = a ∗ {e}^{∧} \left(b∗n\right)$ where:
- *n* is the iteration number
- *a* is the initial scaling factor
- *b* is the rate of decline (typically negative)
- *improvement*(*n*) is the expected improvement in the iteration *n*

The adaptive convergence process includes:
i. Iteration log (320): Keeps track of the history of scores and improvements.
ii. Improvement calculation (330): Determines the difference compared to the previous iteration.
iii. Predictive method decision (340): Evaluates whether there is sufficient data to apply regression.
iv. Exponential modelling (360) or simple estimation (350): Applies the appropriate prediction method.
v. Improvement prediction (370): Calculates expected improvement in next iteration.
vi. Evaluation of continuation using multiple criteria (380-395): Verifies whether the maximum number of iterations or the quality threshold has been reached or whether the expected improvement is insufficient.
vii. Final decision (375-376): Determines whether to stop the process or continue with another iteration.

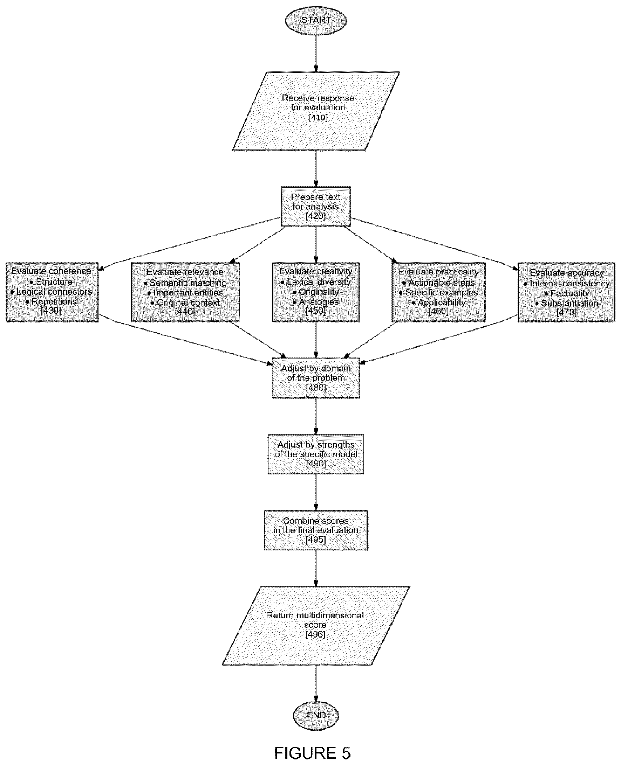

The subject matter of the invention makes use of a process called meta-intelligent evaluation process, the flowchart of which can be seen in Figure 5, this process performing a multidimensional analysis to provide a complete evaluation of the generated responses. Said process starts with receiving a response for evaluation (410) and continues with the preparation of the text for analysis (420), followed by parallel evaluations in five key dimensions.

The meta-intelligent evaluation process implements respective analysis processes in the following dimensions:
- Coherence (430): Where structure, logical connectors and argumentative coherence are processed and evaluated.
- Relevance (440): Where semantic correspondences with the original problem are measured.
- Creativity (450): Which analyses lexical diversity and original elements.
- Practicality (460): Which identifies actionable steps and specific examples.
- Accuracy (470): Which verifies internal consistency and factuality.

This implemented meta-intelligent evaluation process additionally comprises adjustment stages that can be defined as:
- Adjustment by domain of the problem (480): Modifies criteria according to the specific context.
- Adjustment by strengths of the specific model (490): Considers the particular capabilities of the evaluated model.

The individual scores for each analysis process of the meta-intelligent evaluator (495) are then combined using an adaptive weighting algorithm that assigns relative importance to each dimension according to the domain of the problem and the characteristics of the task. This weighting uses the following mathematical formula: ${Score}_{final} = \sum \left(i=1 to 5\right) {w}_{i} ⋅ {Score}_{i}$

Where:
- *Score_{final}* is the final multidimensional score
- *Scoreᵢ* represents the score for each of the five dimensions
   (coherence, relevance, creativity, practicality and accuracy)
- *wᵢ* represents the weight assigned to each dimension, where $\sum \left(i=1 to 5\right) {w}_{i} = 1$

The weights *wᵢ* are determined dynamically according to the type of problem and application domain, using a pre-set configuration table that can be adjusted based on historical performance. This process produces a multidimensional evaluation (496) that reflects the overall quality of the evaluated response in a specific context, allowing objective comparisons between responses from different models.

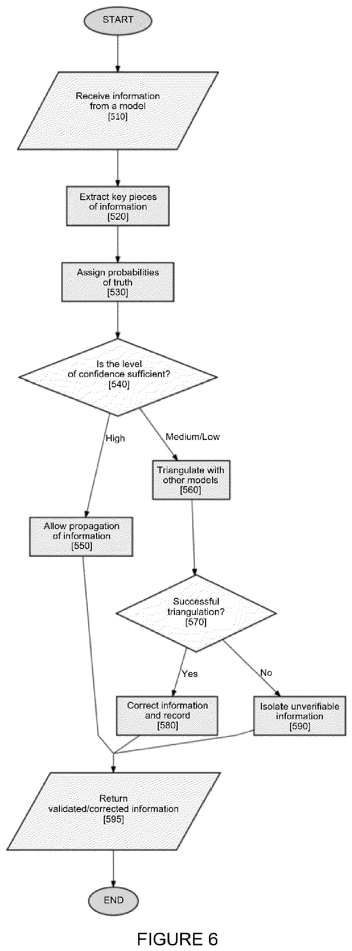

The subject matter of the invention presents the Cross-Hallucination Detection and Correction process (DCAC), see Figure 6, designed to prevent the propagation of misinformation between different collaborative models. DCAC is initiated upon receiving information from a model (510) and it follows a structured process to evaluate and validate the veracity of said information before allowing its propagation, using the following processes to do so:
i. Extraction of key fragments (520): Identifies specific information components.
ii. Assignment of probabilities (530): Uses a Bayesian network to assign confidence values.
iii. Evaluation of level of confidence (540): Determines whether the information meets minimum thresholds.
iv. Direct propagation (550): Enables the dissemination of information with high confidence.
v. Triangulation (560): Verifies medium/low confidence information with other models.
vi. Correction (580) or isolation (590): Processes the information according to the results of the verification.

This process ensures that only validated or high confidence information (595) is integrated, preventing error amplification and improving overall reliability.

Some possible embodiments can be found in which there are conceptual differences between Al models that use different ontological frameworks. As such, the subject matter of the invention implements a process called Automatic Ontology Reconciliation System (SROA), designed to precisely resolve conceptual differences between Al models that use different ontological frameworks. The process starts by receiving responses from multiple models (610) and follows a sequence of analysis and reconciliation to establish bridges between different ontological frameworks by means of the following processes:
- A model response analysing process (620) configured to examine languages and concepts used.
- A concept and relationship extracting process (630) configured to identify key ontological elements, including entities, relationships, conceptual hierarchies and axioms.
- An implicit ontology building process (640) configured to generate a formal representation of each conceptual framework.
- An ontology comparing process (650) configured to identify similarities and differences between ontologies.
- An ontological conflict detecting process (660) configured to determine whether fundamental incompatibilities exist.
- A mapping building process (670) configured to create correspondences between concepts from different ontologies.
- An information translating process (680) configured to reformulate information between different conceptual frameworks.
- A mapping storing process (690) to preserve established correspondences for future use.

This ensures that information is correctly interpreted and transferred between models that use different conceptual structures, producing reconciled information (695) that maintains semantic consistency between different ontologies.

By way of example, possible specific embodiments of the subject matter of the invention are described, illustrating implementations of said subject matter in specific environments and real cases.

In a first exemplary application of the subject matter of the invention, the subject matter of the invention is implemented in collaborative medical diagnostic applications to facilitate collaborative diagnosis between multiple medical Al models. Thus, the subject matter of the invention is configured in such a way that the universal standardisation process of the interaction management module (100) integrates a series of APIs of models specialised in radiology (NVIDIA Clara), laboratory analysis (IBM Watson Health) and general diagnosis (GPT-4). Similarly, the deadlock detector in Figure 3 is configured to identify when models differ significantly with regards to specific diagnoses, while the truth verification module (DCAC) (500) prevents the propagation of incorrect medical information between models by verifying against medical databases. In this implementation, the Ontology Reconciliation Module (SROA) (600) reconciles different medical terminologies between systems (ICD-10 vs. SNOMED CT), while the meta-intelligent evaluation process in Figure 5 applies specific weightings for medical criteria: accuracy (0.6), coherence (0.2), empirical basis (0.2). This implementation achieves a 38% improvement in diagnostic accuracy and reduces analysis time by 62% compared to non-collaborative approaches.

In a first exemplary application of the subject matter of the invention, the subject matter of the invention is implemented in collaborative financial analysis applications. Thus, the subject matter of the invention is configured in such a way that the universal standardisation system of the interaction management module (100) integrates specialised models for quantitative analysis (Bloomberg GPT), sentiment analysis (Claude) and risk assessment (GPT-4), while the DBSCAN clustering process (230) is configured with specific parameters (eps=0.25, min_samples=2) optimised to detect divergences of opinion in financial recommendations. The truth verification module (DCAC) (500) implements rigorous verification of financial data against reliable sources, and likewise, exponential regression modelling optimises the number of iterations needed to converge on investment recommendations. This improves the accuracy of financial recommendations by 41% and reduces exposure to unidentified risks by 65% compared to non-collaborative analyses.

In embodiments of the subject matter of the invention that are aimed at specialised domains such as finance and commerce, additional processes such as validation of financial terminology and business strategy structures, verification of the internal consistency of financial recommendations, and assessment of the risk profile of proposed solutions can be included.

Additionally, the subject matter of the invention may also encompass processes aimed at storing interaction results in a structured shared memory system, updating model performance profiles based on evaluations, and optimising role assignments for future collaborations based on historical performance.

## Claims

1. A method for the collaborative orchestration of artificial intelligences with adaptive iterative consensus, **characterised in that** it comprises:
i. standardising artificial intelligence model names from different vendors using a unified log with bidirectional mapping;
ii. dynamically assigning roles to each model based on an analysis of the problem and the specific strengths of each model;
iii. generating initial responses through each model according to their assigned roles;
iv. cross-checking responses using a meta-intelligent evaluator with multidimensional analysis;
v. detecting potential semantic deadlocks using clustering algorithms;
vi. performing refinement iterations until reaching an optimal convergence point determined by exponential regression modelling; and
vii. synthesising a final solution by combining the best contributions of each model.

2. The method according to claim 1, wherein semantic deadlock detection comprises:
i. transforming the models' responses into high-dimensional embeddings;
ii. applying at least one DBSCAN clustering algorithm to identify semantically similar groups;
iii. evaluating the internal coherence of the clusters and the semantic distance between them; and
iv. implementing specific strategies to resolve the deadlocks detected.

3. The method according to claim 1, wherein determining the optimal convergence point comprises:
i. recording scoring and improvement of each iteration;
ii. applying exponential regression to historical improvements to model the convergence curve;
iii. predicting the expected improvement in the next iteration; and
iv. determining whether to continue the process based on the predicted improvement compared to a minimum adaptive threshold.

4. The method according to claim 1, wherein the multidimensional analysis of the responses comprises evaluating:
a) coherence, through analysis of paragraph structure, logical connectors and repetitions;
b) relevance, through analysis of semantic matching with the original problem;
c) creativity, through analysis of lexical diversity and original elements;
d) practicality, through analysis of identification of actionable steps and specific examples; and
e) accuracy, through analysis of internal consistency verification and factual substantiation.

5. The method according to any one of claims 1 to 4, **characterised in that** it additionally comprises:
a) storing the results of each interaction in a structured shared memory system;
b) updating model performance profiles based on evaluations; and
c) optimising the assignment of roles for future interactions based on historical performance.

6. A system for the collaborative orchestration of artificial intelligences with adaptive iterative consensus, **characterised in that** it comprises at least one processing unit configured to carry out the method of any one of the preceding claims.

7. The system for the collaborative orchestration of artificial intelligences with adaptive iterative consensus according to claim 6, **characterised in that** it comprises connected to each other:
a. an interaction management module configured to standardise and manage communication with different Al models,
b. a coordination and orchestration module configured to monitor the flow of information and detect situations of stagnation,
c. an iterative evaluation and refinement module configured to optimise the convergence process,
d. a persistent shared memory module configured to store and retrieve information from previous iterations,
e. a truth verification module (DCAC) configured to detect and correct misinformation before it is propagated, and
f. an ontology reconciliation module (SROA) configured to resolve conceptual differences between models.

8. The system for the collaborative orchestration of artificial intelligences with adaptive iterative consensus according to claim 6 or 7, wherein the interaction management module comprises:
a. a unified log of models with bidirectional mapping between different nomenclature variants,
b. a dynamic update mechanism sensitive to changes in vendor APIs, and
c. automatic detection and correction mechanisms for new name variants.

9. The system for the collaborative orchestration of artificial intelligences with adaptive iterative consensus according to any one of claims 6 to 8, wherein the coordination and orchestration module comprises:
a. an embedding generator configured to transform textual responses into high-dimensional vectors;
b. a DBSCAN (Density-Based Spatial Clustering of Applications with Noise) clustering engine configured to cluster semantically similar responses,
c. a cluster analyser configured to evaluate internal coherence and divergence between clusters.

10. The system for the collaborative orchestration of artificial intelligences with adaptive iterative consensus according to any one of claims 6 to 9, wherein the iterative evaluation and refinement module comprises:
a. an iteration log that keeps track of the history of scores, improvements and processing times,
b. a predictor of future improvements that implements an exponential regression model to mathematically predict the expected improvement in future iterations, and
c. a continuation evaluator configured to determine whether the process should continue based on adaptable criteria.

11. The system for the collaborative orchestration of artificial intelligences with adaptive iterative consensus according to any one of claims 6 to 10, wherein the meta-intelligent evaluator comprises:
a. a multidimensional processor configured to analyse responses for: coherence, relevance, creativity, practicality and accuracy,
b. an adapter by domain configured to adjust evaluation criteria according to the specific type of problem, and
c. a weight calculator configured to determine the relative importance of each model in the final solution.

12. The system for the collaborative orchestration of artificial intelligences with adaptive iterative consensus according to any one of claims 6 to 11, wherein the truth verification module comprises:
a. a Bayesian trust network configured with a probabilistic model configured to assign probabilities of truth to pieces of information,
b. an information isolation system configured to control propagation according to levels of confidence, and
c. a knowledge triangulation mechanism using weighted voting across multiple models.

13. The system for the collaborative orchestration of artificial intelligences with adaptive iterative consensus according to any one of claims 6 to 12, wherein the ontology reconciliation module (SROA) comprises:
a. an implicit ontology extractor configured to analyse the behaviour of each model to infer its conceptual framework,
b. an ontological incoherence detector configured to identify conflicts between different conceptual frameworks, and
c. a bidirectional conceptual translator configured to reformulate information between different ontological frameworks.

14. A computer program product comprising instructions that, when executed by a computer, cause the computer to implement the method according to any of claims 1 to 5.

## Amended claims

### Amended claims in accordance with Rule 137(2) EPC.

1. A computer-implemented method for collaborative orchestration of artificial intelligences (110) with adaptive iterative consensus, **characterized in that** it comprises:
∘ normalizing (120) names of artificial intelligence models (110) from different suppliers using a unified register with bidirectional mapping;
∘ assigning roles (107) dynamically to each model (110) based on an analysis of the problem and the specific strengths of each model;
∘ generating initial responses by each model (110) according to their assigned roles;
∘ evaluating (300) in a crossed manner the responses using a meta-intelligent evaluator (310) with multidimensional analysis;
∘ detecting (200, 250) potential semantic deadlocks by:
▪ transforming (220) the responses of the models (110) into high-dimensional embeddings;
▪ applying (230) at least one algorithm of clustering DBSCAN to identify semantically similar groups; and
▪ evaluating (240) the internal coherence of the clusters and the semantic distance between them;
∘ performing (300) refinement iterations until reaching an optimal convergence point determined by:
▪ registering (320) the score and improvement of each iteration;
▪ applying (360) exponential regression to the historical improvements to model the convergence curve;
▪ predicting (370) the improvement expected in the next iteration;
▪ determining (380-395) whether to continue the process based on the predicted improvement compared with an adaptive minimum threshold; and
∘ synthesizing (002) a final solution by combining the best contributions of each model (110).

2. The method according to claim 1, wherein the multidimensional analysis (320) of the responses comprises evaluating:
a) coherence (430), by analyzing paragraph structure, logical connectors, and repetitions;
b) relevance (440), by analyzing semantic matching with the original problem;
c) creativity (450), by analyzing lexical diversity and original elements;
d) practicability (460), by analyzing the identification of actionable steps and concrete examples; and
e) precision (470), by analyzing the verification of internal consistency and factual foundation.

3. The method according to any one of claims 1 to 2, **characterized in that** it additionally comprises:
a) storing (400) the results of each interaction in a structured shared memory system;
b) updating (400) performance profiles of the models (110) based on evaluations; and
c) optimizing (400) the assignment of roles for future interactions based on historical performance.

4. The method according to any one of claims 1 to 3, further comprising detecting and correcting cross-hallucinations (500) by using a Bayesian trust network (530) to assign veracity probabilities to information fragments and applying knowledge triangulation (560).

5. The method according to any one of claims 1 to 4, further comprising performing automatic ontology reconciliation (600) by extracting (630) implicit ontologies from each model (110) and constructing (670) conceptual bridges between different conceptual frameworks.

6. A system (10) for collaborative orchestration of artificial intelligences (110) with adaptive iterative consensus, comprising at least one processing unit (20) and a memory (30), **characterized in that** the processing unit (20) is configured to:
∘ execute an interaction management module (100) configured to normalize (120) names of artificial intelligence models (110) from different suppliers using a unified register with bidirectional mapping;
∘ execute a coordination and orchestration module (200) configured to:
▪ assign roles (107) dynamically to each model (110); and
▪ detect (250) potential semantic deadlocks by executing a DBSCAN clustering engine (230) on high-dimensional embeddings (220) of responses and analyzing (240) the resulting clusters;
∘ execute an evaluation and refinement module (300) configured to:
▪ evaluate responses using a meta-intelligent evaluator (310);
▪ determine (380-395) an optimal convergence point by executing an exponential regression model (360) that predicts (370) the expected improvement of the next iteration based on historical improvements (320); and
∘ synthesize (002) a final solution from the refined responses.

7. The system according to claim 6, wherein the module of coordination and orchestration (200) comprises:
o an embedding generator (220) configured to transform textual responses into high-dimensional vectors;
o a DBSCAN clustering engine (230) configured to group semantically similar responses; and
o a cluster analyzer (240) configured to evaluate internal coherence and divergence between clusters.

8. The system according to claim 6 or 7, wherein the module of evaluation and iterative refinement (300) comprises:
o an iteration register (320) that maintains the history of scores, improvements, and processing times;
o a future improvement predictor (370) that implements the exponential regression model (360) to mathematically predict the expected improvement; and
o a continuation evaluator (380-395) configured to determine if the process should stop.

9. The system according to any one of claims 6 to 8, wherein the meta-intelligent evaluator (310) comprises:
o a multidimensional processor (320) configured to analyze responses in: coherence (430), relevance (440), creativity (450), practicability (460), and precision (470); and
o a domain adapter (480) configured to adjust evaluation criteria according to the specific type of problem.

10. The system, according to any one of claims 6 to 9, further comprising a veracity verification module (500) comprising:
o a Bayesian trust network (530) configured with a probabilistic model to assign veracity probabilities to information fragments; and
o a knowledge triangulation mechanism (560) using weighted voting among multiple models.

11. The system according to any one of claims 6 to 10, further comprising an ontology reconciliation module (600) comprising:
∘ an implicit ontology extractor (630) configured to infer the conceptual framework of each model (110); and
∘ a bidirectional conceptual translator (680) configured to reformulate information between different ontological frameworks.

12. A computer program product (311) comprising instructions which, when executed by a computer (10), cause the computer to implement the method according to any one of claims 1 to 5.
